# EUROPÄISCHE PATENTSCHRIFT

(11) **EP 1 192 601 B1**
(45) Veröffentlichungstag und Bekanntmachung des Hinweises auf die Patenterteilung: **19.10.2005**
(21) Anmeldenummer: 99928983.8
(22) Anmeldetag: 06.07.1999
(51) Int. Cl.: G07B 15/00

(54) **VERFAHREN ZUM PRÜFEN VON FAHRKARTEN VON BENUTZERN ÖFFENTLICHER VERKEHRSMITTEL**
METHOD FOR CHECKING TICKETS OF USERS OF PUBLIC PASSENGER VEHICLES
PROCEDE POUR CONTROLER LES BILLETS D'UTILISATEURS DU TRANSPORT EN COMMUN

(43) Veröffentlichungstag der Anmeldung: 03.04.2002
(73) Patentinhaber: Swisscom Mobile AG, 3050 Bern (CH)
(72) Erfinder: RITTER, Rudolf, CH-3052 Zollikofen (CH)
(74) Vertreter: P&TS Patents & Technology Surveys SA
(86) Internationale Anmeldenummer: PCT/CH1999/000298
(87) Internationale Veröffentlichungsnummer: WO 2001/003072

(56) Entgegenhaltungen:
- EP-A- 0 564 940
- WO-A-93/20539
- DE-U- 29 707 353
- GB-A- 2 267 626
- US-A- 5 131 038
- PATENT ABSTRACTS OF JAPAN vol. 1999, no. 03, 31. März 1999 (1999-03-31) & JP 10 340356 A (FUJI ELECTRIC CO LTD), 22. Dezember 1998 (1998-12-22)
- PATENT ABSTRACTS OF JAPAN vol. 007, no. 067 (P-184), 19. März 1983 (1983-03-19) & JP 57 211679 A (MITSUBISHI JUKOGYO KK), 25. Dezember 1982 (1982-12-25)
- HAARTSEN J: "BLUETOOTH - THE UNIVERSAL RADIO INTERFACE FOR AD HOC, WIRELESS CONNECTIVITY" ERICSSON REVIEW,SE,ERICSSON. STOCKHOLM, Nr. 3, 1. Januar 1998 (1998-01-01), Seiten 110-117, XP000783249 ISSN: 0014-0171

## Beschreibung

### Technisches Gebiet

Die vorliegende Erfindung betrifft ein Verfahren zum Prüfen von Fahrkarten von Benutzern öffentlicher Verkehrsmittel.

### Stand der Technik

Es sind schon elektronische Systeme und Verfahren bekannt, um die Berechtigung von Personen, benötigte Dienste beanspruchen zu dürfen, zu prüfen und die Beanspruchung dieser Dienste gegebenenfalls zu verrechnen. Die Patentschrift EP0465456 beschreibt beispielsweise ein System zum Verrechnen der Benutzung von öffentlichen Verkehrsmitteln. Züge oder Busse werden an den Türen mit Lesern ausgerüstet, um das Einsteigen und Aussteigen von Passagieren zu registrieren, die mit einer kontaktlosen Chipkarte ausgestattet sind. Die Ein- und Aussteigezeit der Passagiere werden an eine Zentrale weitergeleitet, die mit Hilfe eines Fahrplans die gefahrene Strecke ermittelt und diese den Passagieren monatlich in Rechnung stellt.

Das in EP0465456 beschriebene System hat den Nachteil, dass bei Zeitverzögerungen im Verkehrsnetz die auf einem Fahrplan basierende Abrechnung zu inkorrekten Ergebnissen führen kann. Zudem eignet sich dieses System nur für eine Erfassung und Verrechnung der Benutzung von speziell ausgerüsteten Vehikeln, in welchen die Reiseberechtigung nur an den Türen geprüft wird. In vielen komplexen Verkehrsnetzen ist es jedoch nicht möglich oder erwünscht, in allen Vehikeln auf eine manuelle Fahrkartenprüfung zu verzichten. Ältere Vehikel lassen sich oft nur mit viel Aufwand mit Lesern an den Türen ausrüsten. Ausserdem verlangen die Passagiere oft Kontrolleure in den Zügen, um Reiseinformationen zu erhalten und damit die Sicherheit in nächtlichen U-Bahn-Zügen gewährleistet ist. Ferner kann dieses System von Passagieren betrogen werden, indem sie beispielsweise ihre Chipkarte durch ein Fenster statt durch die Tür durchführen.

DE-U1-29707353 beschreibt ein Identifizierungssystem zum Speichern und Erkennen von Datenmustern. Die Identifizierung der Benutzer wird mit einem Foto in einem elektronischen Gerät abgelegt und kann an festen Autorisierungsstellen geprüft werden. Dieses System eignet sich nicht, um die Reiseberechtigung bequem durch einen Kontrolleur im Fahrzeug zu prüfen.

WO93/20539 beschreibt ein Parking System, in welchem ein Parking-Wächter mit einem tragbaren Computer prüfen kann, ob jedes Auto im Parking die benötigte Gebühr bezahlt hat. Dieses System eignet sich nicht, um Fahrkarten in öffentlichen Verkehrsmitteln zu prüfen. Insbesondere ist es für einen Kontrolleur nicht bequem, beim Gehen die Berechtigungen zu prüfen.

Patent Abstracts of Japan, Vol1999, N°03, 31 März 1999 & JP-10-340356 beschreibt ein System, um Fahrkarten in einem Zug durch einen Kontrolleur zu prüfen. Der Kontrolleur bekommt ein Signal, das angibt, ob der Ticket gültig ist. Dieses System ist nicht bequem für den Kontrolleur, der beim Gehen die Berechtigungen von mehreren Benutzern prüfen muss.

EP-A-0 564 940 offenbart ein personengebundenes Kommunikationsmittel. Empfangene Meldungen aus verschiedenen Quellen sind unmittelbar auf einem persönlichen Bildschirm sichtbar. Die Informationen werden gespeichert und können bei der Wiedergabe in Reihenfolge und Grösse verändert werden.

### Darstellung der Erfindung

Es ist eine Aufgabe dieser Erfindung, neue und bessere Verfahren und Systeme vorzuschlagen, um die Benutzerberechtigung, beispielsweise die Reiseberechtigung von Passagieren, zu prüfen. Insbesondere ist es eine Aufgabe dieser Erfindung, ein neues Verfahren und ein neues System anzubieten, welche es ermöglichen, die Benutzerberechtigung, beispielsweise die in einem tragbaren Identifizierungsmodul abgelegte Reiseberechtigung, durch einen Kontrolleur prüfen zu lassen.

Gemäss der vorliegenden Erfindung werden die Ziele der Erfindung insbesondere durch die Merkmale der unabhängigen Ansprüche erreicht. Weitere vorteilhafte Ausführungsformen gehen ausserdem aus den abhängigen Ansprüchen und der Beschreibung hervor.

insbesondere werden diese Ziele der Erfindung dadurch erreicht, dass die Identifizierungsdaten und Berechtigungsdaten von Benutzern in einem elektronischen Speicherbereich eines persönlichen Identifizierungsmoduls des Benutzers abgelegt werden und dann kontaktlos an ein tragbares Berechtigungsprüfgerät zur Wiedergabe übertragen werden. Dies hat den Vorteil, dass ein Kontrolleur in einem Vehikel Berechtigungsdaten von Passagieren, die in persönlichen Endgeräten der Passagiere gespeichert sind, prüfen kann, ohne dass die Passagiere ihr Identifizierungsmodul vorweisen müssen. Ausserdem hat dies den Vorteil, dass kontaktlose Identifizierungsmodule, welche für die automatische Kontrolle und Verrechnung mit Lesern an den Türen des Vehikels vorgesehen sind, auch manuell von einem Kontrolleur geprüft werden können.

Das Identifizierungsmodul der Benutzer kann beispielsweise als Chipkarte ausgeführt werden. In einer bevorzugten Variante enthält es einen zusätzlichen Funkempfänger, mit welchem Daten eines externen Senders, beispielsweise eines Radiosenders, empfangen werden können, sowie Wiedergabemittel, beispielsweise eine Anzeige und/oder einen Kopfhörer, mit welchen diese Daten wiedergegeben werden können. Auf diese Weise können auch die im Identifizierungsmodul gespeicherten Berechtigungsdaten "over the air", beispielsweise mit programmbegleitenden Daten, geändert werden.

Das Identifizierungsmodul umfasst vorzugsweise Eingabemittel, beispielsweise eine Tastatur und/oder ein Touchscreen, mit welchen Daten eingegeben werden können. Chipkarten mit einer Tastatur werden unter anderem in der Patentanmeldung EP0813171 beschrieben. Auf diese Weise können zum Beispiel Bestätigungen zur Belastung eines Kontos oder die Reservation eines Sitzplatzes eingegeben und über die benannte kontaktlose Schnittstelle weitergeleitet werden. Bestimmte Identifizierungsmodule, beispielsweise gestohlene, können auch auf diese Weise gesperrt werden.

Das Berechtigungsprüfgerät ist tragbar und elektrisch autonom. Es umfasst visuelle Wiedergabemittel, mit welchen Identifizierungsdaten und Berechtigungsdaten angezeigt werden können. Diese Wiedergabemittel bestehen aus einer VRD-Anzeige (Virtual Retina Display).

Die Identifizierungsdaten enthalten biometrische Parameter des Benutzers des Identifizierungsmoduls. Beispielsweise enthalten diese Daten ein Foto des Benutzers, das über die kontaktlose Schnittstelle übertragen wird und auf dem benannten Berechtigungsprüfgerät angezeigt werden kann. Auf diese Weise kann der Kontrolleur prüfen, ob das Identifizierungsmodul wirklich zum Benutzer gehört.

### Kurze Beschreibung der Zeichnungen

Im folgenden werden anhand der beigefügten Zeichnungen bevorzugte Ausführungsbeispiele der Erfindung näher beschrieben. Es zeigen:
Die Figur 1 eine schematische Ansicht eines Identifizierungsmoduls, in diesem Beispiel eine kontaktlose Chipkarte, mit einem Berechtigungsprüfgerät, in diesem Beispiel eine Brille mit einer VRD-Anzeige.
Die Figur 2 eine schematische Ansicht einer anderen Ausführungsform eines tragbaren Endgerätes, hier als tragbarer Radioempfänger gebaut.
Die Figur 3 eine schematische Ansicht einer anderen Ausführungsform eines tragbaren Endgerätes, hier als Armbanduhr gebaut.
Die Figur 4 eine schematische Ansicht eines Vehikels, in diesem Beispiel ein Bus, mit einem Informationssystem, in welchem die vorliegende Erfindung angewendet werden kann.
Die Figur 5 ein schematisches Blockdiagramm eines systems mit einem erfindungsgemässen tragbaren Berechtigungsprüfgerät 90.

### Wege zur Ausführung der Erfindung

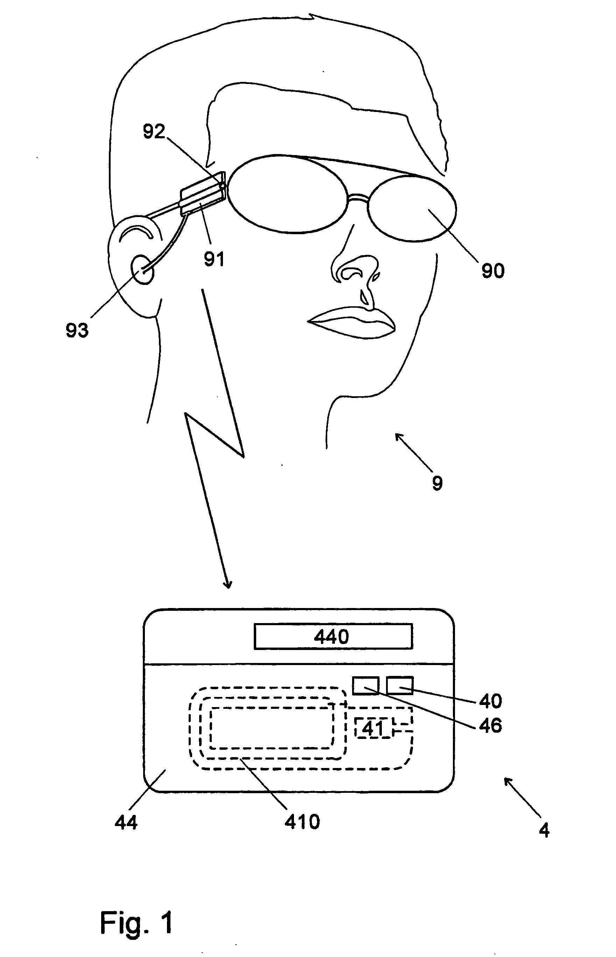

Die Figur 1 zeigt in schematischer Weise das Endgerät 4, in diesem Beispiel eine Chipkarte 44, eines Benutzers, beispielsweise eines Passagiers, und das Berechtigungsprüfgerät 90, das von einem Kontrolleur 9 getragen wird. Die Beschreibung zeigt detailliert das Beispiel der Kontrolle der Fahrkarten in einem Vehikel des öffentlichen Verkehrs, beispielsweise in einem Bus, Zug, Schiff, Flugzeug oder in einer U-Bahn.

Jedes Endgerät 4 enthält ein Identifizierungsmodul 40, in welchem benutzerspezifische Daten abgelegt sind, sowie eine kontaktlose Schnittstelle 41, über welche eine lokale Funkverbindung hergestellt werden kann. Die kontaktlose Schnittstelle erlaubt eine Funkverbindung im Nahbereich (typischerweise bis maximal 20 Meter) und umfasst vorzugsweise einen Chip, beispielsweise einen RFID-Chip (Radio Frequency ID), und eine Antenne 410, beispielsweise eine Spule. Der Chip umfasst ein Funkteil und Datenverarbeitungsmittel und kann Daten in einem definierten Frequenzbereich, beispielsweise in einem ISM-Frequenzbandbereich (Industrial Scientific and Medical Applications) oder im Frequenzbereich zwischen 2,4 bis 2,5 GHz, senden und empfangen. Die Antenne 410 kann je nach angewendeter Frequenz auch im Chip integriert werden, oder aus einer gewickelten Spule bestehen.

Im Identifizierungsmodul 40 werden in verschiedenen Speicherbereichen Identifizierungsdaten und Berechtigungsdaten des Benutzers abgelegt. Die Identifizierungsdaten des Benutzers umfassen vorzugsweise die Identität des Benutzers, beispielsweise seinen Namen und/oder seine Benutzernummer. Falls das Identifizierungmodul 40 auch als SIM-Karte (Subscriber Identification Module) in einem Mobiltelefon eingesetzt werden kann, kann die Identität des Benutzers auch aus seiner IMSI-Nummer (International Mobile Subscriber Identification) im Mobilfunknetz bestehen. Die Identifizierungsdaten umfassen auch biometrische Parameter des Benutzers, beispielsweise ein Foto, Stimmenparameter, Iris- und/oder Retinaparameter, einen Fingerabdruck usw. Mit diesen biometrischen Parametern kann zuverlässig festgestellt werden, ob der Benutzer des Identifizierungsmoduls auch der berechtigte Inhaber ist.

Je nach Anwendung können die Berechtigungsdaten verschiedene Typen von Daten enthalten. Das Identifizierungsmodul 40 wird zur Identifizierung von Passagieren in öffentlichen Verkehrsmitteln benutzt und die Berechtigungsdaten umfassen beispielsweise den Typ und die Gültigkeit des Abonnements und/oder der Fahrkarte des Benutzers, seine Sitzplatzreservationen, eventuelle Sperrungsdaten, wenn das Abonnement gesperrt ist, usw. Diese Daten werden vorzugsweise in einem gesicherten Bereich des Moduls abgelegt, der vom Benutzer alleine nicht geändert werden kann.

Die Identifizierungsdaten, beispielsweise der Name, die Benutzernummer und/oder die biometrischen Parameter des Benutzers, sowie die Berechtigungsdaten, beispielsweise die Abonnementsdaten, können auf einem Gebiet 440 der Oberfläche der Chipkarte gedruckt werden, damit die Identifizierungsmodule 40 durch eine visuelle Inspektion, und ohne Berechtigungsprüfgerät, geprüft werden können.

Die kontaktlose Schnittstelle 41 erlaubt vorzugsweise eine bidirektionale Datenübertragung mit externen Geräten, unter anderem mit einem Berechtigungsprüfgerät 90. Vorzugsweise wird für diese Schnittstelle ein standardisiertes Protokoll eingesetzt, beispielsweise das Bluetooth- oder HomeRF-Protokoll, so dass standardisierte Endgeräte 4 eingesetzt werden können. Die kontaktlose Schnittstelle 41 kann aber auch aus einem RFID-Element (Radio Frequency Identification) bestehen. Je nach Variante kann das Endgerät 4 über eigene Energieversorgungsmittel verfügen, zum Beispiel über eine Batterie oder Solarzellen, oder vom externen Gerät gespeist werden. In einer Variante wird das Endgerät 4 mit durchsichtigen Solarzellen in den Brillen des Benutzers gespeist.

Über die kontaktlose Schnittstelle 41 kann das externe tragbare Berechtigungsprüfgerät 90 auf die Identifizierung- und Berechtigungsdaten des Benutzers zugreifen und diese Daten optisch und/oder akustisch wiedergeben. Das Berechtigungsprüfgerät 90 enthält ein Gehäuse 91 mit einer kontaktlosen Schnittstelle, die das gleiche Protokoll und die gleiche Frequenz wie das Identifizierungsmodul 4 einsetzt. Im Gehäuse 91 ist die gesamte Elektronik (kontaktlose Schnittstelle, Datenverarbeitungsmittel, Batterie und/oder Solarzellen, optionaler zusätzlicher Funkempfänger usw.) untergebracht.

Im dargestellten Beispiel ist das Berechtigungsprüfgerät 90 in einer Brille integriert, die von einem Kontrolleur 9, der der Anwender des Berechtigungsprüfgerätes ist, getragen wird. Das Berechtigungsprüfgerät umfasst eine VRD-Vorrichtung 92 (Virtual Retina Display), die ein Bild direkt auf die Retina des Anwenders 9 projiziert. Solche VRD-Vorrichtungen werden unter anderem von der Firma Microvision angeboten und haben den Vorteil, dass sie stark miniaturisiert werden können und einen geringen Stromverbrauch aufweisen. Das projizierte Bild kann das vom Kontrolleur 9 gesehene Bild überlagern. Ein Kopfhörer 93 kann ausserdem übertragene Daten akustisch wiedergeben, beispielsweise mit einem Stimmensynthesizer.

Das Berechtigungsprüfgerät 90 kann nicht dargestellte Bedienungselemente aufweisen, beispielsweise Tasten und oder ein Touchscreen, mit welchen der Kontrolleur 9 zum Beispiel das Lesen von Identifizierungs- und/oder Berechtigungsdaten und das Scanning aller Identifizierungsmodule 40 veranlassen kann. In einer bevorzugten Ausführungsvariante wird das Berechtigungsprüfgerät 90 mit dem Auge des Anwenders gesteuert, der beispielsweise kontextabhängige Befehle geben kann, indem er in vordefinierte Richtungen schaut. Vorrichtungen, die auf die Position des Auges reagieren, werden in Fotokameras und Videogeräten schon eingesetzt.

In einer bevorzugten Variante der Erfindung kann der Kontrolleur 9 einen Teil des projizierten Bildes vergrössern und/oder verschärfen, indem er eine bestimmte Zeit in die Richtung dieses Teiles des Bildes schaut. In dieser Variante bekommt das Berechtigungsprüfgerät in einer ersten Phase beispielsweise ein Bild, das in den Datenverarbeitungsmitteln im Gehäuse 91 generiert wird, und das eine Liste von Identifizierungsdaten aller Identifizierungsmodulen 40 in Funkverbindung mit dem Berechtigungsprüfgerät 90 darstellt. Der Kontrolleur sieht beispielsweise ein Mosaik mit Fotos aller Passagiere in der Umgebung. Der Kontrolleur kann dann entscheiden, die Identifizierungs-und Berechtigungsdaten eines bestimmten Passagiers anzusehen, indem er eine bestimmte Zeit in die Richtung des dargestellten Bilds dieses Passagiers blickt. Das Berechtigungsprüfgerät verlangt dann vom Identifizierungsmodul 40 des ausgewählten Passagiers, dass es die abgefragten Berechtigungsdaten, oder zusätzliche Identifizierungsdaten, sendet, die in einer zweiten Phase in einem zweiten Bild dem Kontrolleur wiedergegeben werden.

In einer Variante kann ein Kontrolleur 9 nicht ohne die Zustimmug des Benutzers auf die benutzerspezifischen Daten dieses Benutzers zugreifen. Damit mindestens gewisse Daten gelesen werden können, muss in dieser Variante das Lesen dieser Daten mit einer Freigabetaste vom Benutzer freigegeben werden.

In einer Variante der Erfindung enthalten mindestens gewisse Identifizierungsmodule 40 ein gespeichertes elektronisches Konto, das mit Tellermaschinen und/oder "over-the-air" geladen bzw. belastet werden kann. Verfügt das Berechtigungsprüfgerät 90 über Bedienungselemente, kann der Kontrolleur 9 vorzugsweise dieses Konto mit einem entsprechenden Befehl belasten, beispielsweise wenn der Benutzer keine Reiseberechtigung im voraus erworben hat. Vorzugsweise sendet zu diesem Zweck der Kontrolleur 9 eine Belastungsabfrage an das Endgerät 4, die vom Benutzer bestätigt werden muss, bevor das elektronische Geld über die benannte kontaktlose Schnittstelle dem Berechtigungsprüfgerät 90 übertragen wird.

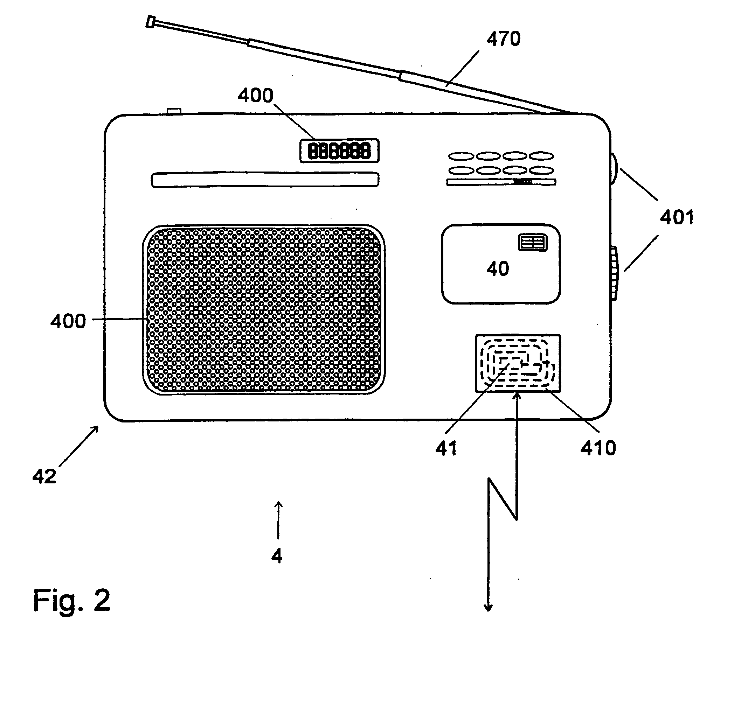

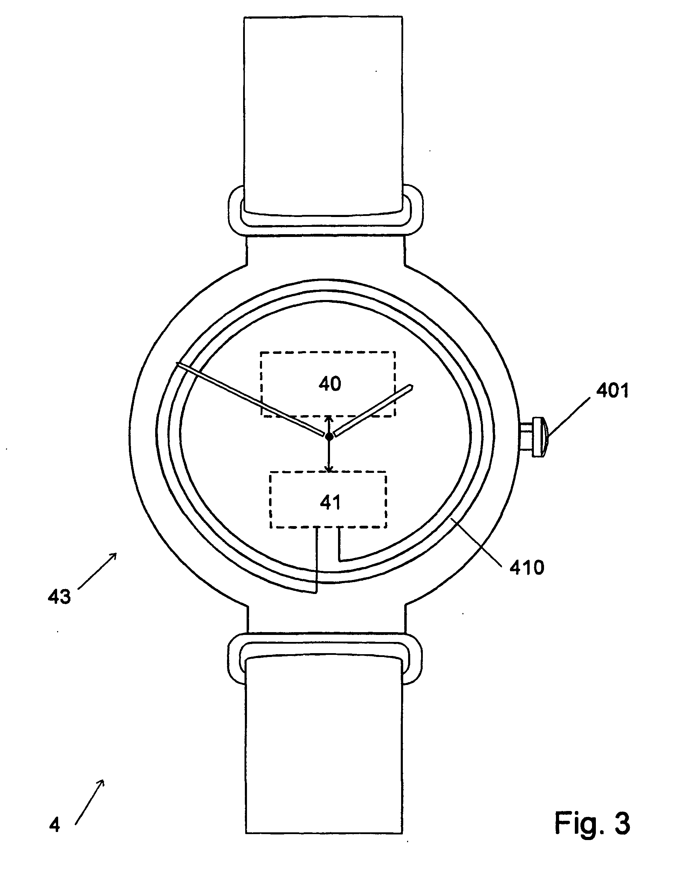

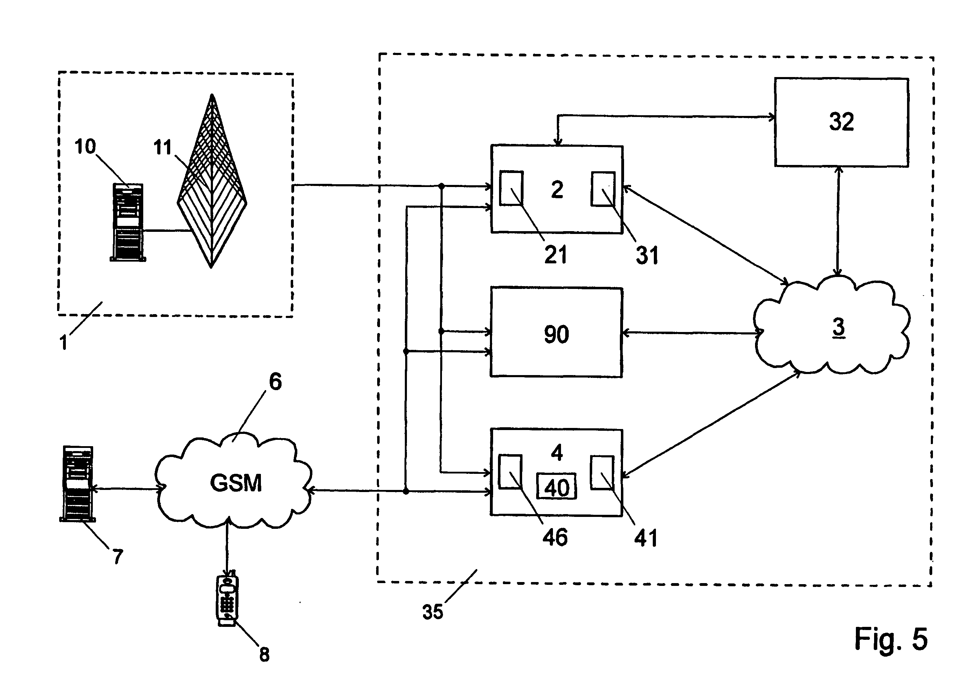

In einer Variante der Erfindung verfügt mindestens ein Teil der Endgeräte 4 über einen zusätzlichen Funkempfänger 46, über welchen Daten eines externen Senders 1 (Figur 5) empfangen werden können. In diesem Fall kann das Identifizierungsmodul 40 auch in einem Funkempfänger, beispielsweise in einem tragbaren Radioempfänger 42 mit einer Antenne 470 (Fig. 2), in einem nicht dargestellten Mobiltelefon, in einem nicht dargestellten Palmtop- oder Laptop-Computer, oder in einer Armbanduhr 43 (Fig. 3), integriert werden. Endgeräte verschiedener Typen können auch innerhalb eines einzigen Vehikels kombiniert werden. Je nach Ausführungsform kann das Endgerät über verschiedene Datenwiedergabemittel 400, beispielsweise über eine Anzeige und/oder einen Kopfhörer, und über verschiedene Eingabemittel 401, beispielsweise über eine Tastatur, ein Touchscreen und/oder über ein Gerät zur Ermittlung der Augenposition, verfügen. Die Anzeige kann beispielsweise eine LCD-Anzeige und/oder vorzugsweise eine VRD-Anzeige (Virtual Retina Display) sein, und somit Betriebszustände wie auch empfangene Bilder und Texte wiedergeben.

Ist das Endgerät 4 voluminös genug, können die Benutzeridentifizierungsdaten und/oder die Berechtigungsdaten in einer entfernbaren Chipkarte abgelegt werden, beispielsweise in einer SIM-Karte (Subscriber Identification Module). Auf diese Weise kann beispielsweise die Berechtigung, beispielsweise eine Fahrkarte, in Form einer Chipkarte vertrieben werden, welche die Benutzer dann nur noch in ihr Endgerät 4 einstecken müssen. Als Variante können die Identifizierungs- und Berechtigungsdaten auch in einem geschützten Speicherbereich (virtuelle SIM-Karte) oder in einem entfernbaren elektronischen Modul des Endgeräts 4 abgelegt werden.

Elektronische Verschlüsselungs- und Signierungsmittel werden vorzugsweise in den Endgeräten 4 und im Berechtigungsprüfgerät 90 vorgesehen, um über die benannte kontaktlose Schnittstelle übertragene Daten zu verschlüsseln und um diese Daten elektronisch zu signieren. Zu diesem Zweck werden vorzugsweise TTP-Dienste (Trusted Third Party) eingesetzt. Das Identifizierungsmodul 40 im Endgerät 4 enthält vorzugsweise ein elektronisches Zertifikat, mit welchem eine End-to-End Verschlüsselung bis zum Kontrolleur 9 gewährleistet werden kann. Auf diese Weise kann sichergestellt werden, dass nur der Kontrolleur 9 auf möglicherweise vertrauliche Daten in den Identifizierungsmodulen 40 zugreifen kann.

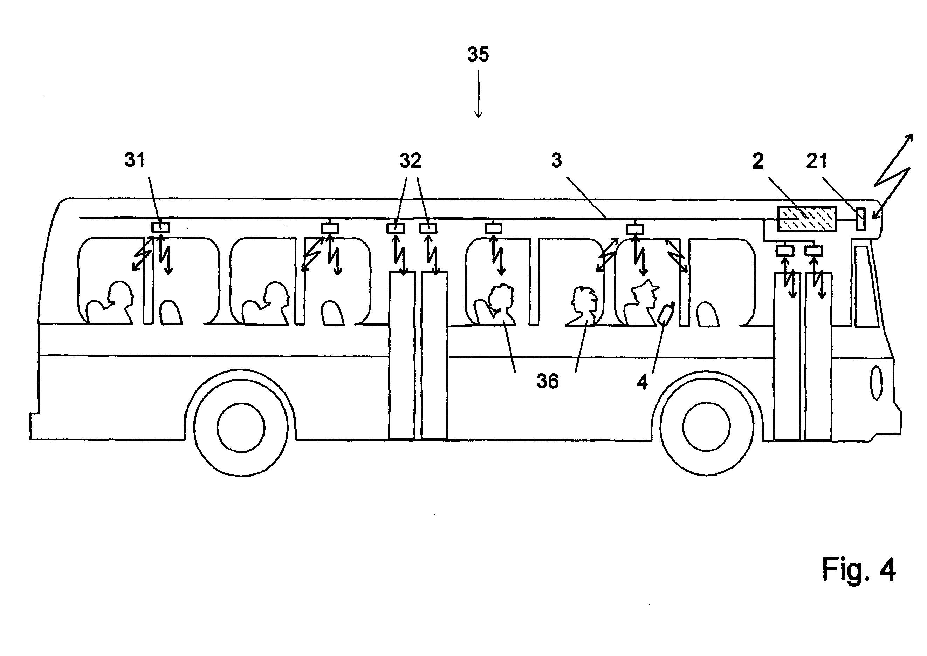

Eine nicht beanspruchte Möglichkeit, um die Reiseberechtigung beim Ein- und Aussteigen zu prüfen, zeigt die Figur 4. Es ist ein Vehikel gezeigt, in diesem Beispiel ein Bus 35, mit einem Informationssystem, in welchem ein Berechtigungsprüfgerät eingesetzt wird. Das Informationssystem im Vehikel umfasst zentrale Datenverarbeitungsmittel 2, zum Beispiel einen Rechner mit geeigneten Schnittstellen, oder einen digitalen Funkempfänger mit einem Prozessor, sowie einen elektronischen Bus 3, der die zentrale Datenverarbeitungsmittel 2 mit einer Vielzahl von Sendern-Empfängern 31,32 verbindet. Jeder Sender-Empfänger verfügt über eine Antenne, wobei die Antennen in Richtung der Passagiere orientiert sind. Gewisse Sender-Empfänger 32 sind vorzugsweise in der Nähe der Türen installiert, um das Ein- und Aussteigen von Passagieren zu überwachen.

Die zentrale Datenverarbeitungsmittel 2 verfügen über mindestens einen Funkempfänger 21, über welchen Daten aus mindestens einem externen Sender 1 oder externen Geräten 7, 8 (Fig. 5) ausserhalb des Vehikels empfangen werden können. Der externe Sender 1 besteht aus einem Gerät 10, welches mit einer Antenne 11 verbunden ist. Je nach Anwendung kann der Funkempfänger 21 beispielsweise DAB (Digital Audio Broadcasting), einschliesslich programmbegleitende Daten, DVB-Daten (Digital Video Broadcasting), einschliesslich programmbegleitende Daten, GSM oder UMTS-Daten (Global System for Mobile), einschliesslich WAP-Daten, GPS-Daten (Global Positionning System) usw. empfangen.

Diese verschiedenen Daten können in den Datenverarbeitungsmitteln 2 in ein anderes Format, beispielsweise in das Bluetooth-Format, umgesetzt und über den elektronischen Bus 3 und die Sender-Empfänger 31-32 den betreffenden Passagieren 36 übermittelt werden.

Betritt ein Passagier 36 das Vehikel bzw den Bus 35 mit seinem Endgerät 4, werden seine im Endgerät 4 abgelegten Identifizierungsdaten über die benannte kontaktlose Schnittstelle und die Sender-Empfänger 32 im Türen-Bereich erfasst und an die Datenverarbeitungsmittel 2 übertragen.

Je nach Ausführungsvariante und Anwendung kann beim Betreten und Verlassen des Vehikels 1 die Übertragung der Identifizierungsparameter durch die Passagiere oder durch die Sender-Empfänger 32 ausgelöst werden. Die Benutzeridentifizierungsdaten werden von einem Softwareprogramm, welches vom Endgerät 4 ausgeführt wird, im Identifizierungsmodul 40 gelesen und mittels geeigneten Kommunikationsprotokollen über die kontaktlose Schnittstelle auf die Sender-Empfänger 32 übertragen, von wo sie über den erwähnten elektronischen Bus 3 an die zentrale Datenverarbeitungsmittel 2 geleitet werden.

Die Datenverarbeitungsmittel 2 können eine über den benannten zusätzlichen Funkempfänger 21 erhaltene Liste von Berechtigungen bzw. von Reservationen und gesperrten Passagieren erhalten und somit feststellen, ob der Passagier 36 einsteigen darf oder ob das Vehikel für ihn gesperrt ist. Falls das Vehikel für den Passagier 36 gesperrt ist, können beispielsweise die Datenverarbeitungsmittel 2 geeignete Schritte einleiten, um dem Passagier 36 das Einsteigen zu verwehren, zum Beispiel können akustische und/oder optische Warnzeichen aktiviert werden und/oder betreffende Eingänge geschlossen, respektive nicht geöffnet werden. Falls das Einsteigen dem Passagier 36 erlaubt ist, kann der Passagier 36 das Vehikel betreten und ein Sitzplatz einnehmen. Im Vehikel sind zusätzliche Sender-Empfänger 31 vorhanden, welche die Identifizierungsparameter im Identifizierungsmodul 40 des Passagiers 36 erfassen und diese an die zentralen Datenverarbeitungsmittel 2 leiten. Diese Datenverarbeitungsmittel können beispielsweise prüfen, ob der Passagier 36 den für ihn reservierten Platz einer ihm zugänglichen Reiseklasse besetzt hat. Zu diesem Zweck können die übertragenen Berechtigungsdaten beispielsweise Reservationsangaben und/oder Reiseklassenangaben enthalten.

Wenn der Passagier 36 auf seinem Platz sitzt, kann er Daten über den Sender-Empfänger 31 erhalten und auf seinem persönlichen Endgerät 4 wiedergeben oder bearbeiten lassen. Die erhaltenen Daten können beispielsweise Touristikinformation, Werbung, Musik, Unterhaltungsprogramme usw. enthalten. Bestimmte Daten können vom Fahrer des Vehikels generiert werden und über den elektronischen Bus 3 an jeden oder an selektierte Passagiere 36 übertragen werden. Andere Informationen, beispielsweise über den Funkempfänger 21 empfangene DAB oder DVB-Programme und programmbegleitende Daten, können in einem geeigneten Format, beispielsweise Blutooth-Format, umgesetzt werden und an die Passagiere 36 adressiert werden.

Die Figur 5 zeigt in schematischer Weise, wie ein komplettes System zum Prüfen der Reiseberechtigung für Benutzer von öffentlichen Verkehrsmitteln zusammengestellt werden kann. In diesem Beispiel umfasst das Vehikel 35 zentrale Datenverarbeitungsmittel 2 mit mindestens einem Funkempfänger 21, der Daten aus einem externen Sender 1, beispielsweise aus einem DAB-Sender und/oder aus einem mit einem Mobilnetz 6 verbundenen externen Gerät 7, 8, empfangen kann. Ein elektronischer Bus 3 ist im Vehikel vorgesehen und mit den zentralen Datenverarbeitungsmitteln 2 verbunden. An diesem Bus 3 sind eine Vielzahl von Sendern-Empfängern 31, 32 im Vehikel und an den Türen angeschlossen, mit welchen sich die Endgeräten 4 der Benutzer kontaktlos verbinden können. Ein Kontrolleur mit einem erfindungsgemäßentragbaren Berechtigungsprüfgerät 90 kann sich über diese kontaktlose Schnittstelle 41 mit den Endgeräten 4 verbinden, um die Identifizierungs- und Berechtigungsdaten der Passagiere zu prüfen.

Das Endgerät 4 kann entweder über einen integrierten Funkempfänger 46 (Radio, Fernsehen oder GSM) und/oder über den elektronischen Bus 3 und die zentralen Datenverarbeitungsmittel 2 Daten eines externen Senders 1 oder von externen Geräten 7, 8 empfangen. Die Kommunikation mit externen Geräten 7, 8 kann auch bidirektional sein. Ausserdem können auf diese Weise auch neue Anwendungen und Daten, beispielsweise Fahrpläne, neue Tarife usw., in die Endgeräte 4 und in das Berechtigungsprüfgerät 90 ferngeladen werden. Ist ein Rückkanal vorhanden, kann der Benutzer auf diese Weise auch eine neue Berechtigung kaufen und beispielsweise neue Fahrkarten, Reservationen usw. fernladen.

### Bezugszeichenliste

- 1: externer Sender
- 10: Gerät
- 11: Antenne
- 2: Datenverarbeitungsmittel
- 21: Funkempfänger
- 3: elektrischer Bus
- 31: Sender, Empfänger
- 32: Sender, Empfänger
- 35: Bus
- 36: Passagier
- 4: Endgerät
- 40: Identifizierungsmodul
- 400: Datenwiedergabemittel
- 401: Eingabemittel
- 41: kontaktlose Schnittstelle
- 42: tragbarer Radioempfänger
- 410: Antenne
- 43: Armbanduhr
- 44: Chipkarte
- 440: Gebiet
- 46: Funkempfänger
- 470: Antenne
- 6: Mobilnetz
- 7: externes Gerät
- 8: externes Gerät
- 9: Kontrolleur
- 90: Berechtigungsprüfungsgerät
- 91: Gehäuse
- 92: VRD-Vorrichtung
- 93: Kopfhörer

## Patentansprüche

1. Verfahren zum Prüfen von Fahrkarten von Benutzern öffentlicher Verkehrsmittel, wobei die Benutzer über tragbare Endgeräte (4) mit einem persönlichen Identifizierungsmodul (40) und einer kontaktlosen Schnittstelle (41) verfügen, mit den Schritten
- Speichern von Berechtigungsdaten in dem persönlichen Identifizierungsmodul (40) eines Endgerätes (4) eines Benutzers,
- Speichern von Identifizierungsdaten, die biometrische Parameter umfassen, welche spezifisch zum externen Aspekt des Benutzers sind, im benannten persönlichen Identifizierungsmodul (40),
- Übertragung der benannten Identifizierungs- und Berechtigungsdaten über die kontaktlose Schnittstelle (41) in ein tragbares Berechtigungsprüfgerät (90),
- visuelle Wiedergabe der benannten Identifizierungs- und Berechtigungsdaten mit einer virtual retinal display-Vorrichtung (92) des tragbaren Berechtigungsprüfgerätes (90)

2. Verfahren gemäss dem vorhergehenden Anspruch, **dadurch gekennzeichnet, dass** das benannte Berechtigungsprüfgerät (90) Bedienungselemente aufweist, mit welchen der Anwender (9) des Berechtigungsprüfgerätes (90) selektieren kann, welche Daten er prüfen will.

3. Verfahren gemäss dem vorhergehenden Anspruch, **dadurch gekennzeichnet, dass** die benannten Bedienungselemente mit dem Auge des Anwenders (9) gesteuert werden.

4. Verfahren gemäss dem vorhergehenden Anspruch, **dadurch gekennzeichnet, dass** das benannte Endgerät (4) ein persönliches Identifizierungsmodul (40) sowie ein RFID-Element als kontaktlose Schnittstelle (41), mit welcher die benannten Daten übertragen werden, umfasst.

5. Verfahren gemäss dem Anspruch 1, **dadurch gekennzeichnet, dass** die benannten Daten über eine Bluetooth-Schnittstelle übertragen werden.

6. Verfahren gemäss dem Anspruch 1, **dadurch gekennzeichnet, dass** die benannten Daten über eine HomeRF-Schnittstelle übertragen werden.

7. Verfahren gemäss dem Anspruch 1, **dadurch gekennzeichnet, dass** die benannten biometrische Parameter ein Bild des benannten Benutzers umfassen.

8. Verfahren gemäss einem der vorhergehenden Ansprüche, **dadurch gekennzeichnet, dass** Daten und Programme über einen zusätzlichen Funkempfänger (46) in das benannte Identifizierungsmodul (40) ferngeladen werden.

9. Verfahren gemäss dem vorhergehenden Anspruch, **dadurch gekennzeichnet, dass** Sperrungsdaten über den benannten Funkempfänger (46) ferngeladen werden.

10. Verfahren gemäss dem Anspruch 8, **dadurch gekennzeichnet, dass** Fahrpläne über den benannten Funkempfänger (46) ferngeladen werden.

11. Verfahren gemäss einem der vorhergehenden Ansprüche, **dadurch gekennzeichnet, dass** in einem erstem Schritt bestimmte Daten einer Vielzahl von Benutzern über die benannte kontaktlose Schnittstelle (41) übertragen werden, dass diese Daten mit dem benannten Berechtigungsprüfgerät (90) wiedergegeben werden, dass ein bestimmter Benutzer ausgewählt wird, und dass zusätzliche Daten dieses ausgewählten Benutzers über die benannte kontaktlose Schnittstelle (41) übertragen werden und wiedergegeben werden.

12. Verfahren gemäss einem der vorhergehenden Ansprüche, **dadurch gekennzeichnet, dass** Daten aus zentralen Datenverarbeitungsmitteln (2) über die benannte kontaktlose Schnittstelle (41) an das benannte Berechtigungsprüfgerät (90) übertragen werden.

13. Verfahren gemäss einem der vorhergehenden Ansprüche, **dadurch gekennzeichnet, dass** Daten aus zentralen Datenverarbeitungsmitteln (2) über die benannte kontaktlose Schnittstelle (41) an mindestens ein benanntes Endgerät (4) übertragen werden.

14. Verfahren gemäss einem der vorhergehenden Ansprüche, **dadurch gekennzeichnet, dass** Daten aus einem externen Sender (1) oder externen Geräten (7, 8) über einen zusätzlichen Funkempfänger (46) im Endgerät (4) übertragen werden.

15. Verfahren gemäss Anspruch 14, **dadurch gekennzeichnet, dass** benannte über einen zusätzlichen Funkempfänger (46) übertragene Daten Sperrungsdaten zur Sperrung des benannten Identifizierungsmoduls (40) umfassen.

16. Tragbares Berechtigungsprüfgerät (90) zum Prüfen von Fahrkarten von Benutzern öffentlicher Verkehrsmittel, wobei
- die Benutzer über tragbare Endgeräte (4) mit einem persönlichen Identifizierungsmodul (40) und einer kontaktlosen Schnittstelle (41) verfügen und in dem benannten persönlichen Identifizierungsmodul (40) Berechtigungsdaten und Identifizierungsdaten, welche biometrische Parameter umfassen, die spezifisch zum externen Aspekt des Benutzers sind, gespeichert sind,
mit
- einer kontaktlosen Schnittstelle, über welche die benannten Berechtigungs- und Identifizierungsdaten von den benannten Identifizierungsmodulen (40) kontaktlos übertragen werden können,
- elektrisch autonomen Speisungsmitteln, und
- einer virtual retinal display-Vorrichtung zur visuellen Wiedergabe der übertragenen Berechtigungs- und Identifizierungsdaten.

17. Tragbares Berechtigungsprüfgerät (90) gemäss dem vorhergehenden Anspruch, in Form einer Brille.

18. Tragbares Berechtigungsprüfgerät (90) gemäss einem der Ansprüche 16 bis 17, **gekennzeichnet durch** Eingabemittel.

19. Tragbares Berechtigungsprüfgerät (90) gemäss dem vorhergehenden Anspruch, in welchem die benannten Eingabemittel mit dem Auge des Anwenders (9) gesteuert werden können.

20. Tragbares Berechtigungsprüfgerät (90) gemäss einem der Ansprüche 16 bis 19, in welchem die benannte kontaktlose Schnittstelle (41) ein RFID-Element umfasst.

21. Tragbares Berechtigungsprüfgerät (90) gemäss einem der Ansprüche 16 bis 19, in welchem die benannte kontaktlose Schnittstelle (41) eine Bluetooth-Schnittstelle ist.

22. Tragbares Berechtigungsprüfgerät (90) gemäss einem der Ansprüche 16 bis 19, in welchem die benannte kontaktlose Schnittstelle (41) eine HomeRF-Schnittstelle ist.

## Claims

1. Method for checking the tickets of users of public transportation, the users having portable terminals (4) with a personal identification module (40) and a contactless interface (41), with the following steps:
storing of authorization data in the portable personal identification module (40) of a terminal (4) of a user,
storing of identification data comprising biometric parameters that are specific to the user's outer appearance in said personal identification module (40),
transmission of said identification and authorization data over the contactless interface (41) in a portable authorization-checking device (90),
visual reproduction of said identification and authorization data with a VRD device (92) of the portable authorization-checking device (90).

2. Method according to the preceding claim, **characterized in that** said authorization-checking device (90) has control elements with which the user (9) of the authorization-checking device (90) can select which data he wishes to check.

3. Method according to the preceding claim, **characterized in that** said control elements are controlled with the eye of the user (9).

4. Method according to the preceding claim, **characterized in that** said terminal (4) comprises a personal identification module (40) as well as a RFID element as contactless interface (41) with which said data can be transmitted.

5. Method according to claim 1, **characterized in that** said data are transmitted over a Bluetooth interface.

6. Method according to claim 1, **characterized in that** said data are transmitted over a HomeRF interface.

7. Method according to claim 1, **characterized in that** said biometric parameters comprise an image of said user.

8. Method according to one of the preceding claims, **characterized in that** data and programs can be downloaded over an additional radio receiver (46) in said identification module (40).

9. Method according to the preceding claim, **characterized in that** blocking data can be downloaded over said radio receiver (46).

10. Method according to claim 8, **characterized in that** timetables can be downloaded over said radio receiver (46).

11. Method according to one of the preceding claims, **characterized in that** certain data of a plurality of users are transmitted in a first step over said interface (41), **in that** these data are reproduced with said authorization-checking device (90), **in that** a specific user is selected and **in that** additional data of this selected user are transmitted over said contactless interface (41) and reproduced.

12. Method according to one of the preceding claims, **characterized in that** data from central data processing means (2) can be transmitted over said contactless interface (41) to said authorization-checking device (90).

13. Method according to one of the preceding claims, **characterized in that** data from central data processing means (2) can be transmitted over said contactless interface (41) to at least one said terminal (4).

14. Method according to one of the preceding claims, **characterized in that** data from an external sender (1) or external devices (7, 8) are transmitted over an additional radio receiver (46) in the terminal (4).

15. Method according to claim 14, **characterized in that** said data transmitted over an additional radio receiver (46) comprise blocking data for blocking said identification module (40).

16. Portable authorization-checking device (90) for checking the tickets of users of public transportation,
the users having portable terminals (4) with a personal identification module (40) and a contactless interface (41), and authorization and identification data that comprise biometric parameters that are specific to the user's outer appearance being stored in said personal identification module (40),
with
a contactless interface, over which said authorization and identification data can be transmitted contactlessly by said identification modules (40),
electrically autonomous feeding means, and
a VRD for visually reproducing the transmitted authorization and identification data.

17. Portable authorization-checking device (90) according to the preceding claim, in the form of glasses.

18. Portable authorization-checking device (90) according to one of the claims 16 to 17, **characterized by** input means.

19. Portable authorization-checking device (90) according to the preceding claim, wherein said input means can be controlled with the eye of the user (9).

20. Portable authorization-checking device (90) according to one of the claims 16 to 19, wherein said contactless interface (41) comprises a RFID element.

21. Portable authorization-checking device (90) according to one of the claims 16 to 19, wherein said contactless interface (41) is a Bluetooth interface.

22. Portable authorization-checking device (90) according to one of the claims 16 to 19, wherein said contactless interface (41) is a HomeRF interface.

## Revendications

1. Procédé pour la vérification de titres de transports d'usagers de moyens de transport publics, les usagers disposant de terminaux portables (4) avec un module d'identification personnel (40) et une interface sans contact (41), avec les étapes:
- mémorisation de données d'autorisation dans le module d'identification personnel (40) d'un terminal (4) d'un usager,
- mémorisation de données d'identification comprenant des paramètres biométriques qui son spécifiques à l'aspect extérieur de l'utilisateur dans ledit module d'identification personnel (40),
- transmission desdites données d'identification et d'autorisation à travers l'interface sans contact (41) dans un appareil portable de vérification d'autorisations (90),
- restitution visuelle desdites données d'identification et d'autorisation avec un dispositif d'affichage rétinien virtuel (92) de l'appareil portable de vérification d'autorisations (90).

2. Procédé selon la revendication précédente, **caractérisé en ce que** ledit appareil de vérification d'autorisations (90) comprend des éléments de commande avec lesquels l'utilisateur (9) de l'appareil de vérification d'autorisations (90) peut sélectionner quelles données il veut vérifier.

3. Procédé selon la revendication précédente, **caractérisé en ce que** lesdits moyens de commande sont actionnés avec l'oeil de l'utilisateur (9).

4. Procédé selon la revendication précédente, **caractérisé en ce que** ledit terminal (4) comprend un module d'identification personnel (40) ainsi qu'un élément RFID comme interface sans contact (41) avec laquelle lesdites données sont transmises.

5. Procédé selon la revendication 1, **caractérisé en ce que** lesdites données sont transmises à travers une interface Bluetooth.

6. Procédé selon la revendication 1, **caractérisé en ce que** lesdites données sont transmises à travers une interface Home-RF.

7. Procédé selon la revendication 1, **caractérisé en ce que** lesdits paramètres biométriques comprennent une image dudit utilisateur.

8. Procédé selon l'une des revendications précédentes, **caractérisé en ce que** des données et des programmes sont téléchargés à travers un récepteur radio supplémentaire (46) dans ledit module d'identification (40).

9. Procédé selon la revendication précédente, **caractérisé en ce que** des données de blocage sont téléchargées à travers ledit récepteur radio (46).

10. Procédé selon la revendication 8, **caractérisé en ce que** des horaires sont téléchargés à travers ledit récepteur radio (46).

11. Procédé selon l'une des revendications précédentes, **caractérisé en ce que** dans une première étape certaines données d'une pluralité d'utilisateurs sont transmises à travers ladite interface sans contact (41), que ces données sont restituées avec ledit appareil de vérification d'autorisations (90), qu'un certain utilisateur est sélectionné, et que des données supplémentaires de cet utilisateur sélectionné sont transmises à travers ladite interface sans contact (41) et restituées.

12. Procédé selon l'une des revendications précédentes, **caractérisé en ce que** des données provenant de moyens centraux de traitement des données (2) sont transmises à travers ladite interface sans contact (41) audit appareil de vérification d'autorisations (90).

13. Procédé selon l'une des revendications précédentes, **caractérisé en ce que** des données provenant de moyens centraux de traitement des données (2) sont transmises à travers ladite interface sans contact (41) à au moins un dit terminal (4).

14. Procédé selon l'une des revendications précédentes, **caractérisé en ce que** des données provenant d'un émetteur externe (1) ou d'appareils externes (7, 8) sont transmis à travers un récepteur radio supplémentaire (46) dans le terminal (4).

15. Procédé selon la revendication 14, **caractérisé en ce que** desdites données transmises à travers un récepteur radio supplémentaire (46) comprennent des données de blocage pour le blocage dudit module d'identification (40).

16. Appareil portable de vérification d'autorisations (90) pour la vérification de titres de transport d'usagers de moyens de transport publics, où
- les usagers disposent de terminaux portables (4) avec un module d'identification personnel (40) et une interface sans contact (41), et des données d'autorisation et des données d'identification comprenant des paramètres biométriques qui sont spécifiques à l'aspect extérieur de l'usager sont mémorisées dans ledit module d'identification personnel (40), avec
- une interface sans contact à travers laquelle lesdites données d'autorisation et d'identification desdits modules d'identification (40) peuvent être transmises sans contact,
- des moyens d'alimentation électriquement autonomes, et
- un dispositif d'affichage virtuel rétinien pour la restitution visuelle des données d'autorisation et d'identification transmises.

17. Appareil portable de vérification d'autorisations (90) selon la revendication précédente, sous la forme de lunettes.

18. Appareil portable de vérification d'autorisations (90) selon l'une des revendications 16 à 17, **caractérisé par** des moyens d'introduction.

19. Appareil portable de vérification d'autorisations (90) selon la revendication précédente, dans lequel lesdits moyens d'introduction peuvent être actionnés avec l'oeil de l'utilisateur (9).

20. Appareil portable de vérification d'autorisations (90) selon l'une des revendications 16 à 19, dans lequel ladite interface sans contact (41) comprend un élément RFID.

21. Appareil portable de vérification d'autorisations (90) selon l'une des revendications 16 à 19, dans lequel ladite interface sans contact (41) est une interface Bluetooth.

22. Appareil portable de vérification d'autorisations (90) selon l'une des revendications 16 à 19, dans lequel ladite interface sans contact (41) est une interface Home-RF.
